# EUROPÄISCHE PATENTANMELDUNG

(11) **EP 1 906 287 A1**
(43) Veröffentlichungstag der Anmeldung: **02.04.2008**
(21) Anmeldenummer: 07015855.5
(22) Anmeldetag: 11.08.2007
(51) Int. Cl.: G05B 19/418

(54) **Speicherprogrammierbare Steuereinrichtung mit integriertem Datenbanktreiber**

(30) Priorität: 29.09.2006 DE 102006046643
(71) Anmelder: Phoenix Contact GmbH & Co. KG, 32825 Blomberg (DE)
(72) Erfinder: Leseberg, Gerd, 31812 Bad Pyrmont (DE); Pollmann,Werner, 37671 Höxter (DE)
(74) Vertreter: Kampfenkel, Klaus

(57) **Zusammenfassung**

Die Erfindung betrifft insbesondere ein Automatisierungssystem (10; 110), bei welchem eine speicherprogrammierbare Steuereinrichtung (20; 120) über ein Netzwerk (100; 200) mit einem Datenbanksystem (60; 160) verbunden werden kann. Damit die speicherprogrammierbare Steuereinrichtung (20; 120) direkt mit dem Datenbanksystem (60; 160) Daten austauschen kann, weist die speicherprogrammierbare Steuereinrichtung (20; 120) einen ersten, einer physikalischen Schnittstelle (50; 150) zugeordneten Treiberbaustein (42; 132) zur Steuerung einer Datenübertragung über das Netzwerk (10; 110) sowie einen zweiten Treiberbaustein (41; 132) zur Steuerung des Datenaustauschs mit der Datenbankeinrichtung (60; 160) auf.

## Beschreibung

Die Erfindung betrifft eine Datenübertragungsanlage mit wenigstens einer speicherprogrammierbaren Steuereinrichtung und wenigstens einer Datenbankeinrichtung, die an einem Netzwerk, beispielsweise dem Ethernet, angeschlossen sind. Weiterhin betrifft die Erfindung eine speicherprogrammierbare Steuereinrichtung, die vorzugsweise zum Einsatz in einer solchen Datenübertragungsanlage ausgebildet ist.

Allgemein bekannt ist es, die beispielsweise in Firmen anfallenden großen Datenmengen in sogenannten Datenbanksystemen zu speichern. Hierbei können die beispielsweise von einem Personalcomputer erzeugten Daten in die Datenbank geschrieben und von dem Personalcomputer auch wieder ausgelesen werden. Die Verwaltung der Daten in der Datenbank übernimmt eine Datenverwaltungssoftware, die unter anderem eine Datenbanksprache, wie zum Beispiel SQL (Structured Query Language) enthalten kann. Die Datenverwaltungssoftware und somit auch die Datenbanksprache sind in einem Datenbanktreiber implementiert und ermöglichen unter anderem, dass Personalcomputer Daten in der Datenbank hinterlegen und Daten aus der Datenbank abfragen können.

Große Datenmengen fallen auch bei der Steuerung, Überwachung und Konfiguration von Automatisierungsanlagen an. Die Steuerungs- und Überwachungsaufgaben übernehmen hierbei beispielsweise speicherprogrammierbare Steuereinrichtungen (SPS), die über entsprechende Eingabe- und Ausgabeschnittstellen verfügen, an die Sensoren bzw. Aktoren angeschlossen werden können. Ein Nachteil der eingesetzten speicherprogrammierbaren Steuereinrichtungen ist darin zu sehen, dass die zu verwaltenden Daten in einem internen Datenspeicher abgelegt werden müssen.

Der Erfindung liegt demzufolge die Aufgabe zugrunde, eine Datenübertragungsanlage, insbesondere eine Automatisierungsanlage zur Verfügung zu stellen, bei der alle anfallenden Daten, auch die von einer speicherprogrammierbaren Steuereinrichtung gelieferten Daten in einer separaten Datenbank abgelegt werden können.

Ein Kerngedanke der Erfindung ist darin zu sehen, eine speicherprogrammierbare Steuereinrichtung mit einem zusätzlichen Treiberbaustein auszustatten, der eine direkte Kommunikation mit einer Datenbankeinrichtung ermöglicht, so dass die SPS um Daten zur Datenbankeinrichtung übertragen und aus der Datenbankeinrichtung wieder auslesen kann.

Das oben genannte technische Problem wird zum einen durch die Merkmale des Anspruchs 1 gelöst.

Danach ist eine Datenübertragungsanlage vorgesehen, die wenigstens eine speicherprogrammierbare Steuereinrichtung und wenigstens eine Dätenbankeinrichtung aufweist, die über ein Netzwerk miteinander verbunden sind. Die speicherprogrammierbare Steuereinrichtung weist einen ersten, einer physikalischen Schnittstelle zugeordneten Treiberbaustein zur Steuerung einer Datenübertragung über das Netzwerk sowie einen zweiten Treiberbaustein zur Steuerung des Datenaustausches mit der Datenbankeinrichtung auf.

Demzufolge benötigt die speicherprogrammierbare Steuereinrichtung vorteilhafterweise keinen internen Datenspeicher mit großer Kapazität mehr, um alle wesentlichen Daten, wie zum Beispiel Steuerparameter, Sensordaten und dergleichen zu speichern.

Vorteilhafte Weiterbildungen sind Gegenstand der Unteransprüche.

In vorteilhafter Weise ist der zweite Treiberbaustein, nachfolgend auch Datenbanktreiber genannt, in der Anwendungsebene der speicherprogrammierbaren Steuereinrichtung implementiert. Um den Programmieraufwand niedrig halten zu können, und speicherprogrammierbare Steuereinrichtungen für eine Vielzahl von Datenbanksystemen offen halten zu können, enthält der zweite Treiberbaustein ein Datenbank-Kommunikationsprotokoll, welches in einer für speicherprogrammierbare Steuereinrichtungen üblichen Sprache gemäß dem IEC 61131 Standard geschrieben ist. Vorteilhafterweise sind alle notwendigen Funktionen und Protokolle zum Austausch von Daten mit der Datenbankeinrichtung in einer der IEC 61131 Sprachen geschrieben.

Wird der zweite Treiberbaustein in der Anwendungsebene erstellt, besteht vorteilhafterweise die Möglichkeit, dass auch der erste Treiberbaustein, nachfolgend auch kurz Hardwaretreiber genannt, in der Anwendungsebene, und zwar vorteilhafterweise in einer Sprache des IEC 611131 Standards erstellt werden kann. In diesem Fall kann die speicherprogrammierbare Steuereinrichtung unabhängig von deren Firmware oder Betriebssystem auf die Datenbankeinrichtung zugreifen. Alternativ könnte der Hardwaretreiber auch im Betriebssystem der speicherprogrammierbaren Steuereinrichtung in einer Hochsprache erstellt werden.

In der Regel verwenden die an das Netzwerk angeschalteten Datenbankeinrichtungen einen standardisierten Datenbanktreiber als Teil des Betriebssystems.

Um einen offenen Datenaustausch zwischen der speicherprogrammierbaren Steuereinrichtung und der Datenbankeinrichtung zu ermöglichen, ist der zweite Treiberbaustein der speicherprogrammierbarene Steuereinrichtung derart ausgebildet, dass er Befehle und Funktionen eines herkömmlichen Kommunikationsprotokolls für Datenbanksysteme ausführen kann.

Alternativ kann der zweite Treiberbaustein der speicherprogrammierbaren Steuereinrichtung Teil des Betriebssystems oder der Firmware der speicherprogrammierbaren Steuereinrichtung sein. In diesem Fall handelt es sich bei dem zweiten Treiberbaustein um einen herstellerabhängigen, das heißt proprietären Datenbanktreiber. Ein Datenaustausch mit der Datenbankeinrichtung ist in diesem Fall nur möglich, wenn auch in der Datenbankeinrichtung der entsprechende proprietäre Datenbanktreiber implementiert ist.

Dank der Maßnahme, einen IEC 61131-basierten Datenbanktreiber in einer speicherprogrammierbaren Steuereinrichtung zu implementieren, ist es möglich, im wesentlichen jede auf dem IEC 61131 Standard basierende speicherprogrammierbare Steuereinrichtung in ein Netzwerk einzubinden, um Daten mit einer Datenbankeinrichtung auszutauschen. Das Betriebssystem oder die Firmware der speicherprogrammierbaren Steuereinrichtung muss dann lediglich nur noch einen rudimentären Hardwaretreiber enthalten, der für den Aufbau einer physikalischen Verbindung zwischen der speicherprogrammierbaren Steuereinrichtung und der Datenbankeinrichtung über das Netzwerk notwendig ist. Wird beispielsweise als Netzwerk das Ethernet verwendet, muss der Hardwaretreiber lediglich eine Ethernet-Verbindung zwischen der speicherprogrammierbaren Steuereinrichtung und dem Datentbankserver unterstützen. Hierzu genügt es, dass der erste Treiberbaustein der speicherprogrammierbaren Steuereinrichtung lediglich einen Ethernet-Chipsatz enthält. Der notwendige TCP/IP-Protokolltreiber kann dann in der IEC 61131 Anwendungsebene oder in der Betriebssystem-/Firmware-Umgebung der speicherprogrammierbaren Steuereinrichtung realisiert werden.

Das oben genannte technische Problem wird zum Anderen durch die Merkmale des Anspruchs 10 gelöst. Danach ist eine speicherprogrammierbare Steuereinrichtung vorgesehen, die einen ersten, einer physikalischen Schnittstelle zugeordneten Treiberbaustein zur Steuerung einer Datenübertragung über ein Netzwerk sowie einen zweiten Treiberbaustein zur Steuerung des Datenaustausch mit einer externen Datenbankeinrichtung aufweist.

Vorteilhafte Weiterbildungen sind in den Unteransprüchen umschrieben.

Die Erfindung wird nachfolgend anhand zweier Ausführungsbeispiele in Verbindung mit den beiliegenden Zeichnungen näher erläutert. Es zeigen:
- Fig. 1: eine beispielhafte Datenübertragungsanlage mit einer SPS und einem Datenbanksystem, welche über entsprechende Datenbanktreiber Daten austauschen können, und
- Fig. 2: ein alternatives Ausführungsbeispiel einer Datenübertragungsanlage, bei der eine SPS Daten mit einer Datenbankeinrichtung austauschen kann.

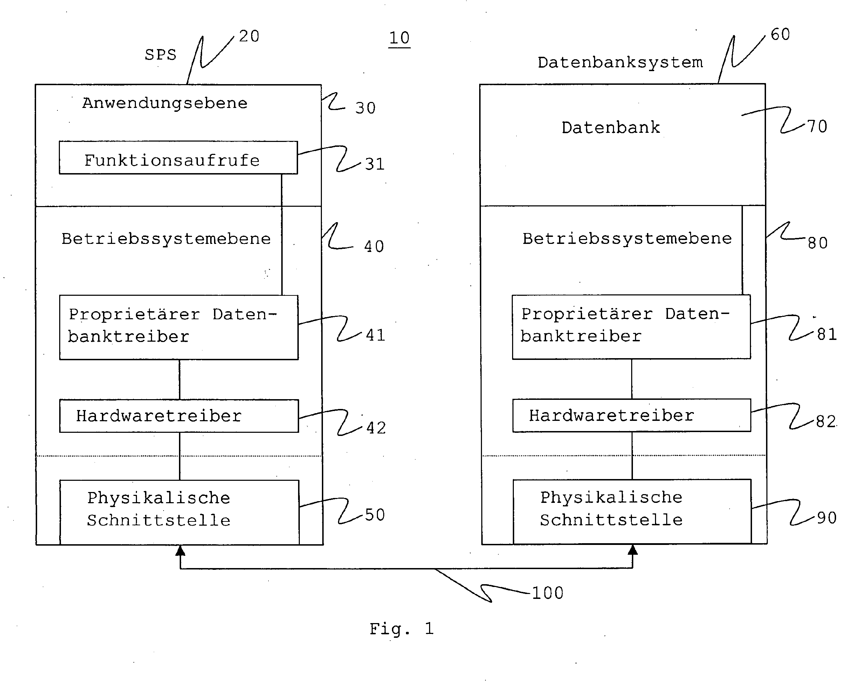

Fig. 1 zeigt schematisch einen Ausschnitt aus einer beispielhaften Automatisierungsanlage 10, bei der eine speicherprogrammierbare Steuereinrichtung 20, nachfolgend kurz SPS genannt, über ein Netzwerk mit einem Datenbanksystem 60 unmittelbar Daten austauschen kann. Das Netzwerk ist im vorliegenden Beispiel schematisch durch eine Verbindungsleitung 100 dargestellt, die beispielsweise eine Ethernet-Verbindung sein kann. Die speicherprogrammierbare Steuereinrichtung 20 weist in herkömmlicher Weise eine Anwendungsebene 30 auf, in der eine Anwendungssoftware beispielsweise zum Steuern, Überwachen und Konfigurieren der Automatisierungsanlage 10 abgelegt ist. In der Anwendungsebene 30 ist ferner schematisch ein Funktionsblock 31 dargestellt, der Funktionsaufrufe zum Lesen von Daten aus einer Datenbank und/oder zum Schreiben von Daten in eine Datenbank starten und absetzen kann. Angemerkt sei, dass die Software in der Anwendungsebene 30 vorzugsweise in einer Sprache des IEC 61131 Standards geschrieben ist. Weiterhin enthält die SPS 20 in an sich bekannter Weise eine Betriebssystem- und/oder Firmwareebene 40. Damit die SPS 20 Daten zum Datenbanksystem 60 übertragen und aus diesem abfragen kann, ist in der Betriebssystem- oder der Firmware-Ebene 40 der SPS 20 ein proprietärer Datenbanktreiber 41 implementiert, der die Funktionsaufrufe aus dem Funktionsblock 31 in entsprechende Datenbanksteuerbefehle umsetzt. Mit Hilfe des proprietären Datenbanktreibers 41 ist die SPS 20 in der Lage, Daten über das Netzwerk 100 mit dem Datenbanksystem 60 auszutauschen. Insbesondere kann die SPS 20 mittels des proprietären Datenbanktreibers 41 das Datenbanksystem 60 nach Daten abfragen. In der Betriebssystem- oder Firmware-Ebene 40 ist weiterhin ein Hardwaretreiber implementiert, der die von dem proprietären Datenbanktreiber 41 kommenden Befehle einer physikalischen Schnittstelle 50 zuführt. Die Datenbanksteuerbefehle werden dann von der physikalischen Verbindung 100 über das Netzwerk 100 zu einer korrespondierenden physikalischen Schnittstelle 90 des Datenbanksystem 60 übertragen.

Das Datenbanksystem 60 enthält in an sich bekannter Weise ein Betriebssystem, welches einen Hardwaretreiber 82 und einen proprietären Datenbanktreiber 81 aufweist, der mit dem proprietären Datenbanktreiber 41 der SPS 20 Daten austauschen kann. Darüber hinaus enthält das Datenbanksystem 60 einen Datenspeicher, also die eigentliche Datenbank 70.

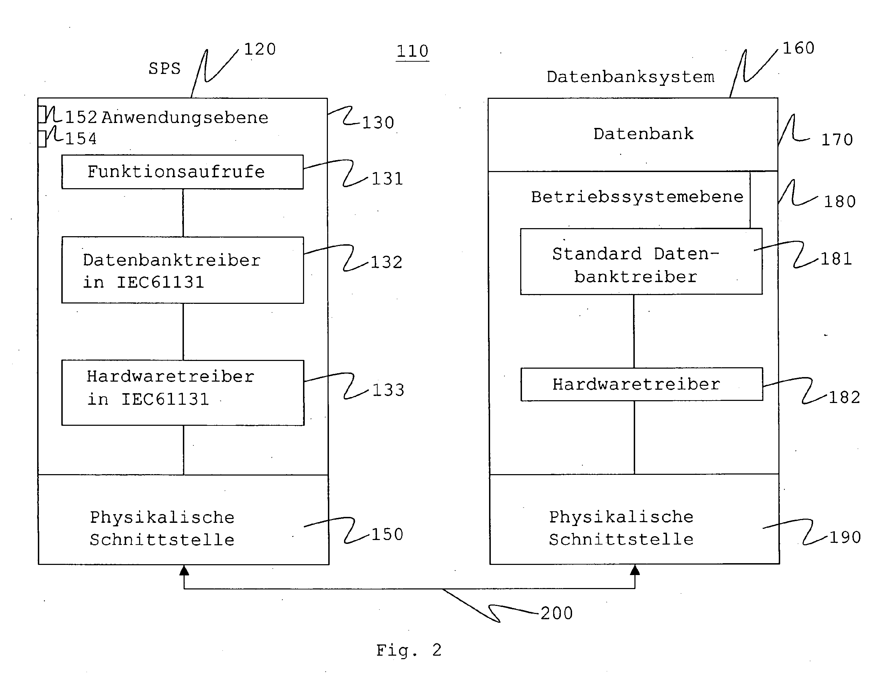

Eine alternative Ausführungsform einer Datenübertragungsanlage 110 ist in Fig. 2 dargestellt.

Wiederum ist ein Netzwerk schematisch durch eine Verbindung 200 dargestellt, die eine speicherprogrammierbare Steuereinrichtung 120, kurz SPS genannt, und ein Datenbanksystem 160 miteinander verbinden.

Ein wesentlicher Unterschied zu der in Fig. 1 dargestellten speicherprogrammierbaren Steuereinrichtung 20 besteht darin, dass die SPS 120 anstelle eines proprietären Datenbanktreibers, der in der Firmware oder im Betriebssystem der SPS 20 angeordnet ist, einen Datenbanktreiber 132 in der Anwendungsebene 130 der SPS 120 enthält. In dem Datenbanktreiber 132 ist ein Kommunikationsprotokoll zur,Kommunikation mit dem Datenbanksystem 160 implementiert, welches in einer Sprache des IEC 61131 Standards geschrieben ist. Sowohl die Anwendungssoftware der SPS 120 als auch das Funktionsaufrufemodul 131 sind in einer Sprache des IEC 61131 Standards geschrieben. Das Funktionsaufrufemodul 131 umfasst eine Steuersoftware, mit deren Hilfe Anwendungsprogramme der SPS 120 Daten zum Datenbanksystem 160 übertragen und aus dem Datenbanksystem 160 bzw. einer im Datenbanksystem implementierten Datenbank 170 auslesen können. Da der Datenbanktreiber 132 unabhängig von der Firmware oder dem Betriebssystem der SPS 120 geschrieben worden ist, kann die SPS 120 mit gewöhnlichen Standard-Datenbanktreibern kommunizieren. In dem Datenbanksystem 160 ist demzufolge in der Betriebssystemebene 180 ein solcher Standard-Datenbanktreiber 181 implementiert.

Wird der Datenbanktreiber 132 in IEC 61131-Sprache geschrieben, ist es möglich, auch einen Hardwaretreiber 133 in einer IEC 61131 Sprache zu schreiben und in der Anwendungsebene 130 der SPS 120 zu implementieren. Alternativ kann der Hardwaretreiber 133 auch Bestandteil der Firmware oder des Betriebssystems der SPS 120 sein. Diese Variante ist nicht dargestellt.

Ähnlich der in Fig. 1 dargestellten Anlage 10 weist sowohl die SPS 120 als auch das Datenbanksystem 160 eine physikalische Schnittstelle 150 beziehungsweise 190 auf, über die Daten über das Netz 200 übertragen werden können. Ähnlich dem Datenbanksystem 60 weist das Datenbanksystem 160 in der Betriebssystemebene neben dem Standard-Datenbanktreiber 181 noch einen Hardwaretreiber 182 auf.

Weiterhin weist die SPS 120 wenigstens eine Eingabeschnittstelle 152 auf, an die ein Sensor (nicht dargestellt) angeschlossen sein kann. Ferner ist wenigstens eine Ausgabeschnittstelle 154 vorgesehen, an die ein Aktor (ebenfalls nicht dargestellt) angeschlossen werden kann.

Handelt es sich bei dem Netzwerk um das Ethernet, enthalten die Hardwaretreiber der SPS und des Datenbanksystems den erforderlichen TCP-IP-Protokolltreiber, der in an sich bekannter Weise die zu übertragenden Daten an das Ethernet-Format anpasst.

Nachfolgend wird beispielhaft die Funktionsweise der Datenbankübertragungsanlage 110 in Verbindung mit Fig. 2 erläutert.

Zunächst sei angenommen, dass an der Eingabeschnittstelle 152 der SPS 120 ein Temperatursensor angeschlossen ist, der regelmäßig Temperaturdaten zur SPS 120 überträgt. Um die an der SPS 120 empfangenen Temperaturdaten in der Datenbank 170 ablegen zu können, greift ein in der SPS 120 laufendes Steuerprogramm auf das Funktionsaufrufemodul 131 zu, um dem Datenbanktreiber 132 zu signalisieren, dass nunmehr Daten zum Datenbanksystem 160 übertragen werden sollen. Der entsprechende Datenbank-Schreibbefehl wird vom Datenbanktreiber 132 dem Hardwaretreiber 133 übergeben, der den Datenbank-Schreibbefehl in ein Datenformat umsetzt, welches über die physikalische Schnittstelle 150 und das Ethernet 200 zur physikalischen Schnittstelle 190 des Datenbanksystem 160 übertragen werden kann. Von dort gelangt der Datenbank-Schreibbefehl über den Hardwaretreiber 182 zum Standard- Datenbanktreiber 181. Nunmehr wird dem Datenbanksystem 160 signalisiert, dass Temperaturdaten von der SPS 120 ankommen, die in der Datenbank 170 hinterlegt werden sollen. Die Temperaturdaten werden von der SPS 120 zusammen mit dem Datenbank-Schreibbefehl oder zu einem späteren Zeitpunkt zum Datenbanksystem 160 übertragen und in die Datenbank 170 geschrieben. Unter Steuerung eines Datenverwaltungsprogramms, welches im Standard-Datentreiber 181 implementiert ist, werden die empfangenen Temperaturdaten an entsprechenden Stellen in der Datenbank 170 hinterlegt.

Dank des Datenbanktreibers 132 kann ein in der SPS 120 laufendes Anwendungsprogramm auch Daten aus der Datenbank 170 auslesen. Hierzu greift das Anwendungsprogramm auf das Funktionsaufrufemodul 131 zu, um die SPS 120 zu veranlassen, einen Datenbank-Lesebefehl über den Datenbanktreiber 132, den Hardwaretreiber 133, die physikalische Schnittstelle 150 zur physikalischen Schnittstelle 190 des Datenbanksystems 160 und von dort über den Hardwaretreiber 182 zum Standard-Datentreiber 181 des Datenbanksystems 160 zu übertragen. Der Datenbank-Lesebefehl enthält Angaben über die Daten, die Anwendungssoftware der SPS 120 abfragen möchte. Daraufhin werden die entsprechenden Daten unter Steuerung des Standard-Datentreibers 181 aus der Datenbank 170 ausgelesen und zur SPS 120 übertragen.

## Patentansprüche

1. Datenübertragungsanlage (10; 110)mit
wenigstens einer speicherprogrammierbaren Steuereinrichtung (20; 120) und wenigstens einer Datenbankeinrichtung (60; 160), die über ein Netzwerk (100; 200) miteinander verbunden sind, wobei die speicherprogrammierbare Steuereinrichtung (20; 120) folgende Merkmale aufweist:
einen ersten, einer physikalischen Schnittstelle (50; 150) zugeordneten Treiberbaustein (42; 133) zur Steuerung einer Datenübertragung über das Netzwerk (100; 200) und
einen zweiten Treiberbaustein (41; 132) zur Steuerung des Datenaustausch mit der Datenbankeinrichtung (60; 160).

2. Datenübertragungsanlage nach Anspruch 1,
**dadurch gekennzeichnet, dass**
der zweite Treiberbaustein (132) in der Anwendungsebene (130) der speicherprogrammierbaren Steuereinrichtung (120) implementiert ist.

3. Datenübertragungsanlage nach Anspruch 2,
**dadurch gekennzeichnet, dass**
der zweite Treiberbaustein (132) ein Datenbank-Kommunikationsprotokoll enthält, welches in einer Sprache gemäß dem IEC61131 Standard geschrieben ist.

4. Datenübertragungsanlage nach Anspruch 3,
**dadurch gekennzeichnet, dass**
der erste Treiberbaustein (133) in der Anwenderebene (130) implementiert oder Teil des Betriebssystems oder der Firmware der speicherprogrammierbaren Steuereinrichtung (120) ist.

5. Datenübertragungsanlage nach Anspruch 4,
**dadurch gekennzeichnet, dass**
der erste Treiberbaustein (133) ein Kommunikationsprotokoll enthält, dass in einer Sprache des IEC61131 Standards geschrieben ist.

6. Datenübertragungsanlage nach einem der
Ansprüche 2 bis 4,
**dadurch gekennzeichnet, dass**
die Datenbankeinrichtung (160) einen Standard-Datenbanktreiber (181) zur Kommunikation mit dem zweiten Treiberbaustein (132) der speicherprogrammierbaren Steuereinrichtung (120) enthält.

7. Datenübertrtagungsanlage nach Anspruch 1,
**dadurch gekennzeichnet, dass**
der zweite Treiberbaustein (41) Teil des Betriebsystems oder der Firmware (40) der speicherprogrammierbaren Steuereinrichtung (20) ist.

8. Datenübertragungsanlage Speichersystem nach einem der Ansprüche 1 bis 7,
**dadurch gekennzeichnet, dass**
der zweite Treiberbaustein (41; 132) Befehle und Funktionen eines herkömmlichen Kommunikationsprotokolls für Datenbanksysteme ausführen kann.

9. Datenübertragungsanlage nach einem der
Ansprüche 1 bis 8
**dadurch gekennzeichnet, dass**
das Netzwerk (100; 200) ein TCP/IP-basiertes Netzwerk ist.

10. Speicherprogrammierbare Steuereinrichtung (20; 120) insbesondere zum Einsatz in einer Datenübertragungsanlage nach einem der Ansprüche 1 bis 9, mit
einem ersten, einer physikalischen Schnittstelle (50; 150) zugeordneten Treiberbaustein (42; 133) zur Steuerung einer Datenübertragung über ein Netzwerk (100; 200) und
einem zweiten Treiberbaustein (41; 132) zur Steuerung des Datenaustausch mit einer externen
Datenbankeinrichtung (60; 160).

11. Speicherprogrammierbare Steuereinrichtung (20; 120) nach Anspruch 10,
**dadurch gekennzeichnet, dass**
der zweite Treiberbaustein (132) in der Anwendungsebene (130) der speicherprogrammierbaren Steuereinrichtung (120) implementiert ist.

12. Speicherprogrammierbare Steuereinrichtung (20; 120) nach Anspruch 11,
**dadurch gekennzeichnet, dass**
der zweite Treiberbaustein (132) ein Datenbank-Kommunikationsprotokoll enthält, welches in einer Sprache gemäß dem IEC61131 Standard geschrieben ist.

13. Speicherprogrammierbare Steuereinrichtung (20; 120) nach Anspruch 12,
**dadurch gekennzeichnet, dass**
der erste Treiberbaustein (133) in der Anwenderebene (130) implementiert oder Teil des Betriebssystems oder der Firmware der speicherprogrammierbaren Steuereinrichtung (120) ist.

14. Speicherprogrammierbare Steuereinrichtung (20; 120) nach Anspruch 13,
**dadurch gekennzeichnet, dass**
der erste Treiberbaustein (133) ein Kommunikationsprotokoll enthält, dass in einer Sprache des IEC61131 Standards geschrieben ist.

15. Speicherprogrammierbare Steuereinrichtung (20; 120) nach Anspruch 10,
**dadurch gekennzeichnet, dass**
der zweite Treiberbaustein (41) Teil des Betriebsystems oder der Firmware (40) der speicherprogrammierbaren Steuereinrichtung (20) ist.
